# EUROPÄISCHE PATENTSCHRIFT

(11) **EP 3 172 393 B1**
(45) Veröffentlichungstag und Bekanntmachung des Hinweises auf die Patenterteilung: **05.12.2018**
(21) Anmeldenummer: 15736236.9
(22) Anmeldetag: 07.07.2015
(51) Int. Cl.: E05F 15/695, H05B 1/02, H02P 7/00

(54) **VERSTELLVORRICHTUNG MIT EINER EINE BRÜCKENSCHALTUNG AUFWEISENDEN STEUEREINHEIT**
ADJUSTMENT DEVICE HAVING A CONTROL UNIT PROVIDED WITH A BRIDGE CIRCUIT
DISPOSITIF DE POSITIONNEMENT AVEC UNE UNITÉ DE COMMANDE POSSÉDANT UN CIRCUIT EN PONT

(30) Priorität: 22.07.2014 DE 102014214239
(43) Veröffentlichungstag der Anmeldung: 31.05.2017
(73) Patentinhaber: Brose Fahrzeugteile GmbH & Co. Kommanditgesellschaft, Bamberg, 96052 Bamberg (DE)
(72) Erfinder: GRIESMANN, Manuel, 87675 Stötten am Auerberg (DE); KRIESE, Olaf, 96450 Coburg (DE); KALB, Roland, 96269 Grossheirath (DE)
(74) Vertreter: Maikowski & Ninnemann Patentanwälte Partnerschaft mbB
(86) Internationale Anmeldenummer: PCT/EP2015/065447
(87) Internationale Veröffentlichungsnummer: WO 2016/012231

(56) Entgegenhaltungen:
- EP-A1- 1 056 620
- EP-A2- 1 369 987
- CN-U- 201 517 333
- CN-U- 203 172 564
- JP-A- 2010 110 084
- US-A- 4 562 387
- US-A- 4 575 662
- US-A- 5 920 165

## Beschreibung

Die vorliegende Erfindung betrifft insbesondere eine Verstellvorrichtung für ein Verschlusselement an einem Fahrzeug nach dem Oberbegriff des Anspruchs 1.

Ein solches Verschlusselement kann beispielsweise eine Fensterscheibe, ein Schiebedach oder ein Cabrioverdeck umfassen. Üblicherweise sind derartige Verschlusselemente heutzutage fremdkraftbetätigt über einen Antriebsmotor einer Verstellvorrichtung zwischen einer maximal offenen und einer maximal geschlossenen Stellung verstellbar. Zur Steuerung der Verstellbewegung ist eine elektronische Steuereinheit vorgesehen, die dazu dient, die Drehzahl sowie die Drehrichtung eines mit dem Verschlusselement gekoppelten Antriebselements des Antriebsmotors zu steuern. Ein solches Antriebselement, beispielsweise in Form einer Antriebswelle des Antriebsmotors, ist dann über eine Verstellmechanik der Verstellvorrichtung mit dem Verschlusselement gekoppelt ist, um eine Verstellkraft an das Verschlusselement zu übertragen.

Insbesondere bei Verstellvorrichtungen in Form eines Fahrzeugfensterhebers ist es bekannt, dass eine elektronische Steuereinheit für die Steuerung des Antriebsmotors eine Brückenschaltung umfasst, um den Antriebsmotor mit elektrischem Strom zu versorgen und die Drehzahl und die Drehrichtung des Antriebselements zu steuern. Eine typische Brückenschaltung umfasst hierbei vier Transistoren, vorzugsweise vier spannungsgesteuerte Feldeffekttransistoren.

Darüber hinaus sind an einem Fahrzeug weitere Verbraucher vorgesehen, deren Bestromung über zusätzliche Steuergeräte und Schaltungen separat von der Verstellbewegung eines Verschlusselements gesteuert werden kann. Ein Beispiel hierfür ist die Scheibenheizung einer Heck- und/oder Seitenscheibe des Fahrzeugs oder eines Spiegels. In der Praxis erfolgt eine Steuerung der Bestromung einer separaten Scheibenheizung beispielsweise mittels wenigstens eines zusätzlichen Transistors.

Die US 5 920 165 A beschreibt eine elektronische Steuereinheit für die Steuerung eines Wischermotors eines Fahrzeugs und für die Bestromung eines zusätzlichen Verbrauchers in Form einer Fenster- oder Spiegelheizung.

Die JP 2010 110084 A beschreibt einen Motor für einen Fensterheber.

Es ist nun Aufgabe der vorliegenden Erfindung, eine Möglichkeit bereitzustellen, Kosten und Montageaufwand im Hinblick auf die innerhalb eines Fahrzeugs vorzusehende Elektronik zu verringern und hierbei insbesondere im Bereich einer Verstellvorrichtung für die fremdkraftbetätigte Verstellung eines Verschlusselements anzusetzen.

Diese Aufgabe wird mit einer Verstellvorrichtung des Anspruchs 1 oder einer Steuereinheit des Anspruchs 9 gelöst.

Hierbei ist erfindungsgemäß vorgesehen, die Brückenschaltung einer elektronischen Steuereinheit, die zur Versorgung des Antriebsmotors der Verstellvorrichtung mit elektrischen Strom und zur Steuerung der Drehzahl sowie der Drehrichtung eines mit dem Verschlusselement zu koppelnden Antriebselements des Antriebsmotors vorgesehen ist, ebenfalls mit wenigstens einem zusätzlichen Verbraucher des Fahrzeugs zu verbinden und ebenfalls zur Steuerung der Bestromung diesen zusätzlichen Verbrauchers zu nutzen.

Derart wird über die die Verstellbewegung des Verschlusselements steuernde Brückenschaltung (und über ein und dieselbe Spannungsquelle) wenigstens ein zusätzlicher Verbraucher des Fahrzeugs bei Bedarf gezielt mit Strom versorgt. Der zusätzliche Verbraucher kann somit über dieselbe Brückenschaltung aktiv und inaktiv geschaltet werden. Mittels der Brückenschaltung für das Verschlusselement sind somit auch Schalt- und/oder Spannungszustände eines zusätzlichen Verbrauchers, zum Beispiel einer Spiegel- und/oder Scheibenheizung und/oder eines elektrochromen Glases, steuerbar.

Durch die Nutzung der ohnehin für die Verstellvorrichtung des Verschlusselements vorzusehende Brückenschaltung für die Steuerung der Bestromung des wenigstens einen zusätzlichen elektrischen Verbrauchers können zusätzliche Schaltungselemente, wie zum Beispiel Halbleiterbauelemente, entfallen, die ansonsten für die Steuerung der Bestromung des Verbrauchers vorgesehen werden müssten. Damit verbunden ist auch regelmäßig ein geringerer Leitungsquerschnitt der Zuleitungen sowie eine Reduzierung störender elektrischer oder elektromagnetischer Effekte.

In einem Ausführungsbeispiel ist der Antriebsmotor der Verstellvorrichtung in einem Brückenzweig der Brückenschaltung verschaltet und der zusätzliche Verbraucher an den Brückenzweig angeschlossen.

Gemäß der Erfindung umfasst die Brückenschaltung vier Transistoren, über die je nach Ansteuerung insbesondere eine Drehung des Antriebselements des Antriebsmotors in die eine oder in die andere Drehrichtung gesteuert werden kann. Eine solche Brückenschaltung mit vier identischen Transistoren für die Steuerung eines Antriebsmotors ist beispielsweise im Zusammenhang in einem Fahrzeugfensterheber für ein zu verstellendes Verschlusselement in Form einer Seitenscheibe hinlänglich bekannt. Hierbei werden bevorzugt spannungsgesteuerte Transistoren eingesetzt, mithin sogenannte Feldeffekttransistoren. Gemäß der erfindungsgemäßen Lösung ist vorgesehen, dass einer der Transistoren der Brückenschaltung auch zur Bestromung des zusätzlichen Verbrauchers ansteuerbar ist. Der zusätzliche Verbraucher ist folglich mit der vier Transistoren aufweisenden Brückenschaltung so verbunden, dass durch ein Durchschalten lediglich eines der Transistoren eine Bestromung des zusätzlichen Verbrauchers erreicht wird. So wird beispielsweise über eine entsprechende Ansteuerung dieses Transistors auch der zusätzliche Verbraucher bei Bedarf mit Strom versorgt und aktiviert.

Hierbei ist der zur Bestromung des zusätzlichen Verbrauchers ansteuerbare Transistor für eine größere Leistungsaufnahme ausgelegt als die übrigen Transistoren der Brückenschaltung. Der zu Bestromung des zusätzlichen Verbrauchers ansteuerbare Transistor weist somit mit anderen Worten eine größere Stromtragfähigkeit als die übrigen Transistoren auf. Eine derartige Ausgestaltung einer Brückenschaltung mit drei identischen Transistoren und einem "stärkerem" Transistor, der dauerhaft für eine höhere Leistungsaufnahme durch den zusätzlichen Verbraucher ausgelegt ist, bietet sich beispielsweise bei einem Fahrzeugfensterheber an. Im Zuge der erfindungsgemäßen Lösung wird hierbei einer von vier Transistoren einer Fensterheber-Brückenschaltung für eine größere Leistungsaufnahme ausgelegt und für die Steuerung und Bestromung einer Seitenscheibenheizung genutzt. Die Brückenschaltung für die Steuerung einer Verstellbewegung einer Fahrzeugseitenscheibe ist hierbei somit ebenfalls dazu genutzt, die Steuerung einer Scheibenheizung für die zu verstellende Seitenscheibe zu realisieren.

In einem Ausführungsbeispiel ist die Brückenschaltung ausgebildet und vorgesehen, den zusätzlichen Verbraucher zu bestromen, wenn das Antriebselement des Antriebsmotors zu einer Drehung in eine bestimmte Drehrichtung angetrieben wird. Die Brückenschaltung ist folglich hier derart ausgebildet und mit dem zusätzlichen Verbraucher verschaltet, dass automatisch eine Bestromung des zusätzlichen Verbrauchers erfolgt, wenn das Antriebselement motorisch in eine bestimme Drehrichtung gedreht wird. Der zusätzliche Verbraucher ist in einem solchen Ausführungsbeispiel bevorzugt mit der Brückenschaltung derart verschaltet und an einen Brückenzweig der Brückenschaltung angeschlossen, dass bei einer Bestromung des Antriebsmotors zur Verstellung des Verschlusselements in eine bestimmte Verstellrichtung (von zwei möglichen Verstellrichtungen) der zusätzliche Verbraucher in Reihe mit dem Antriebsmotor geschaltet ist. Durch die Einsparung zusätzlicher Schaltungselemente für die Steuerung der Bestromung des wenigstens einen zusätzlichen Verbrauchers wird hierbei in Kauf genommen, dass die Bestromung des Verbrauchers direkt mit der Ansteuerung des Antriebsmotors zur Verstellung des Verschlusselements gekoppelt ist. So wird hier beispielsweise ein und derselbe Transistor einer Brückenschaltung sowohl für die Verstellung des Verschlusselements in eine (erste) von zwei möglichen Verstellrichtungen angesteuert als auch für die Bestromung des zusätzlichen Verbrauchers.

Alternativ oder ergänzend kann die Brückenschaltung ausgebildet und vorgesehen sein, eine Bestromung des zusätzlichen Verbrauchers zu unterbrechen, solange das Antriebselement des Antriebsmotors zu einer Drehung in eine bestimmte Drehrichtung angetrieben wird. Die Brückenschaltung ist in diesem Fall so aufgebaut, das die Bestromung des Verbrauchers für die Zeitspanne unterbrochen wird, in der über dem Antriebsmotor eine Verstellung des Verschlusselements in eine bestimmte Verstellrichtung erfolgt. Ist beispielsweise der zusätzliche Verbraucher über die Brückenschaltung bestromt und eingeschaltet, wird dessen Bestromung während der Verstellung des Verschlusselements in einer (zweiten) der (möglichen beiden) Verstellrichtungen unterbrochen, da für die Verstellung in diese (zweite) Verstellrichtung derjenige Transistor der Brückenschaltung inaktiv / nicht geschaltet ist bzw. nicht angesteuert wird, dessen Ansteuerung für die Bestromung des zusätzlichen Verbrauchers notwendig ist.

In einer hierauf basierenden Ausführungsvariante ist beispielsweise die Brückenschaltung derart ausgebildet und mit dem zusätzlichen Verbraucher verschaltet, dass ein über die Brückenschaltung bestromter oder eingeschalteter Verbraucher zwar weiterhin bestromt oder eingeschaltet bleibt, wenn der Antriebsmotor das Verschlusselement in eine erste Verstellrichtung verstellt, jedoch die Bestromung des Verbrauchers unterbrochen oder der Verbraucher abgeschaltet wird, wenn das Verschlusselement über den Antriebsmotor in die andere, zweite Verstellrichtung verstellt wird.

Wie bereits einleitend erwähnt, kann das Verschlusselement beispielsweise eine Fensterscheibe, ein Schiebedach oder Cabrioverdeck eines Fahrzeugs umfassen. In einer Ausführungsvariante umfasst das Verschlusselement eine motorisch verstellbare Heckklappe, wobei die Brückenschaltung vorzugsweise zur Ansteuerung wenigstens eines Spindelantriebs für die Verstellung der Heckklappe vorgesehen ist.

Der zusätzliche Verbraucher kann beispielsweise ein Heizelement, insbesondere eine Spiegel- und/oder Scheibenheizung und/oder ein elektrochromes Glas - vorzugsweise ein elektrochromes Glas einer Seiten- oder Heckscheibe und/oder eines Spiegels des Fahrzeugs - umfassen.

Bei einer Steuerung und Bestromung eines elektrochromen Glases über die ebenfalls zur Steuerung des Antriebsmotors vorgesehenen Brückenschaltung kann vorgesehenen sein, dass eine etwaige schaltungstechnisch notwendige Unterbrechung der Bestromung des Verbrauchers während einer Verstellung des Verschlusselements in eine bestimmte Verstellrichtung den Grad der Transparenz des elektrochromen Glases für einen Nutzer nicht oder zumindest kaum mit bloßem Auge sichtbar beeinflusst. Hierfür kann das elektrochrome Glas und/oder seine Steuerelektronik so ausgebildet sein, das eine Unterbrechung der Bestromung für eine Zeitspanne, in der das Verschlusselement unter Normalbedingungen von seiner maximal geschlossenen in seine maximal offene Stellung verstellt wird oder umgekehrt, nahezu keine für einen Nutzer visuell wahrnehmbare Veränderung des Gerades der Transparenz des Glases verursacht. Das elektrochrome Glas, die Brückenschaltung und die über den Antriebsmotor vorgegebene Verstellgeschwindigkeit des Verschlusselements (in zumindest eine Verstellrichtung) sind hierbei derart aufeinander abgestimmt, dass das Verschlusselement die jeweilige anzufahrende Endposition, also seine maximal geschlossene oder maximal offene Stellung, erreicht, ohne dass die mit der Verstellung einhergehende Unterbrechung der Bestromung des elektrochromen Glases zu einer sichtbaren Veränderung der Transparenz des Glases führt. So reagiert in einem Ausführungsbeispiel beispielsweise ein elektrochromes Glas derart träge auf eine Unterbrechung der angelegten Spannung, dass nahezu keine für den Nutzer erkennbare Veränderung der Transparenz des Glases während einer maximal möglichen Verstellung des Verschlusselements auftritt. Dementsprechend ist bei einer Verstellvorrichtung in Form eines Fahrzeugfensterhebers keine Veränderung der Transparenz der zu verstellenden, mit elektrochormen Glase versehenen Seitenscheibe während eines kompletten Scheibenhubes für einen Nutzer erkennbar.

In einer Variante kann alternativ oder ergänzend ein interner Zeitgeber vorgesehen sein, der bei einem Ansteuerbefehl zur Abdunklung des elektrochromen Glases gestartet wird. Erst nach Ablauf einer durch den Zeitgeber vorgegebenen Verzögerungszeitspanne erfolgt eine Ansteuerung des elektrochromen Glases, um dieses abzudunkeln. Die Verzögerungszeitspanne kann dabei derart voreingestellt sein, dass sie mindestens der Zeitspanne entspricht, die zum Verstellen der Verschlusselements in eine Endposition benötigt wird, also der Zeitspanne für einen Maximalhub. Vor einer gewünschten Abdunklung erreicht somit die jeweilige Scheibe in jedem Fall fremdkraftbetätigt ihre jeweilige Endposition, bevor das elektrochrome Glas überhaupt zur Abdunklung angesteuert wird. Die Verzögerungszeitspanne kann hierbei auch variabel und/oder veränderbar sein, insbesondere in Abhängigkeit von einer aktuellen Verstellposition des Verschlusselements. Diese Verzögerungszeitspanne - z.B. höchstens 3s beim Schließen einer Fahrzeug-Fensterscheibe - kann angesichts der Trägheit eines elektrochromen Glases in Kauf genommen werden, ohne den Komfort für einen Nutzer merklich zu reduzieren.

In einem Ausführungsbeispiel kann auf Basis der erfindungsgemäßen Lösung vorgesehen sein, dass ein einzelnes Steuergerät für die Steuerung des Antriebsmotors und für die Steuerung der Bestromung des wenigstens eine zusätzlichen Verbrauchers vorgesehen ist. Über die Nutzung einer einzelnen Brückenschaltung für beide Steuerungszwecke können die Steuerungsfunktionen ohne weiteres in einem einzelnen Steuergerät zusammengefasst werden, um Kosten und Montageaufwand zu reduzieren.

Im Rahmen der Erfindung wird zudem eine elektronische Steuereinheit für die fremdkraftbetätigte Verstellung eines Verschlusselements an einem Fahrzeug vorgeschlagen, z.B. in Form eines Steuergeräts.

Die Steuereinheit umfasst dabei eine Brückenschaltung, um einen Antriebsmotor mit elektrischem Strom zu versorgen und die Drehzahl sowie die Drehrichtung eines mit dem Verschlusselement zu koppelnden Antriebselements des Antriebsmotors zu steuern. Ferner ist die Brückenschaltung mit wenigstens einem zusätzlichen elektrischen Verbraucher des Fahrzeugs verbindbar und zur Steuerung der Bestromung des wenigstens einen zusätzlichen elektrischen Verbrauchers ausgebildet und vorgesehen.

Eine erfindungsgemäße elektronische Steuereinheit kann somit insbesondere in einer erfindungsgemäßen Verstellvorrichtung zum Einsatz kommen, so dass die diesbezüglich genannten Vorteile und Merkmale auch für eine erfindungsgemäße elektronische Steuereinheit gelten und umgekehrt.

Dementsprechend umfasst die Brückenschaltung vier Transistoren, über die je nach Ansteuerung insbesondere eine Drehung des Antriebselements des Antriebsmotors in die eine oder in die andere Drehrichtung gesteuert werden kann. Einer der Transistoren ist zur Bestromung des zusätzlichen Verbrauchers ansteuerbar und hierbei für eine größere Leistungsaufnahme ausgelegt als die übrigen Transistoren der Brückenschaltung.

Weitere Vorteile und Merkmale der Erfindung werden des Weiteren bei der nachfolgenden Beschreibung von Ausführungsbeispielen anhand der Figuren deutlich werden.

Hierbei zeigen:
- Fig. 1: beispielhaft eine Brückenschaltung einer erfindungsgemäßen Verstellvorrichtung in Form eines Fahrzeugfensterhebers, bei dem die Brückenschaltung gleichfalls zur Steuerung der Bestromung einer Scheibenheizung ausgebildet ist;
- Fig.2: ein Diagramm, in dem die Betriebszustände des Fensterhebers oder seines Antriebesmotors und der Scheibenheizung bei unterschiedlichen Verstellbewegungen der Fensterscheibe über die Zeit aufgetragen sind;
- Fig.3A-3B: Strom-Zeit-Diagramme zur Veranschaulichung des Stromverlaufs für die eingeschaltete Heizung bei den unterschiedlichen Vestellbewegungen der Fensterscheibe;
- Fig.4A-4B: Strom-Zeit-Diagramme zur Veranschaulichung des Stromverlaufs für den Antriebsmotor bei Verstellung der Fensterscheibe in die eine und die andere Verstellrichtung;
- Fig.5: eine aus dem Stand der Technik bekannte Brückenschaltung für einen Fahrzeugfensterheber mit separatem Transistor für die Steuerung der Bestromung einer Scheibenheizung.

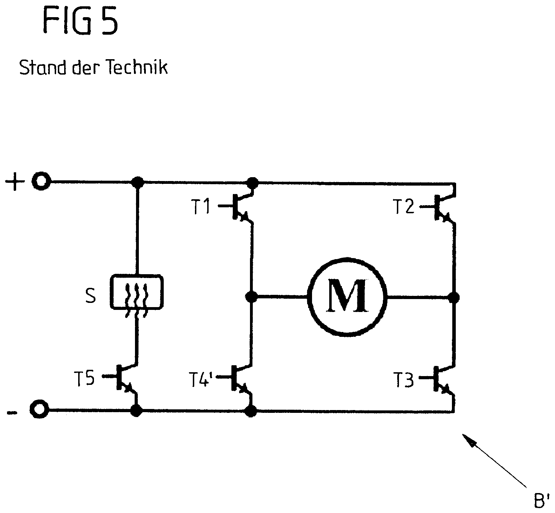

Die Figur 5 zeigt exemplarisch eine aus dem Stand der Technik bekannte Brückenschaltung B' für eine elektronische Steuereinheit zur Steuerung eines Antriebsmotors M eines Fahrzeugfensterhebers sowie eine hierzu separate Steuerungsschaltung mit einem Transistor T5 zur Steuerung der Bestromung einer Scheibenheizung S.

Die Brückenschaltung B' umfasst vier identisch ausgebildete Transistoren T1, T2, T3 und T4', die in Abhängigkeit von der Ansteuerung der jeweiligen Transistoren T1 bis T3 und T4' eine Regulierung der Drehzahl und Drehrichtung eines durch den Antriebsmotor M angetriebenen Antriebselements, zum Beispiel in Form einer Antriebswelle, gestatten. Das Antriebselement des Antriebsmotors M ist dabei über eine hier nicht dargestellte Verstellmechanik mit der zu verstellenden Fensterscheibe gekoppelt, so dass je nach der Drehrichtung des Antriebselements die Fensterscheibe in eine erste Verstellrichtung abgesenkt und in eine hierzu entgegengesetzte, zweite Verstellrichtung angehoben werden kann. Eine solche Verstellmechanik kann beispielsweise wenigstens einen mit der Fensterscheibe verbundenen Mitnehmer, eine Führungsschiene, an dem der Mitnehmer verschieblich geführt ist, und einen Seilzug, der mit dem Mitnehmer verbunden und von dem Antriebsmotor M angetrieben wird, umfassen.

Die zusätzliche Scheibenheizung S für Beheizung der zu verstellenden (oder einer anderen) Fensterscheibe wird über ein zusätzliches Halbleiterbauelement in Form des Transistors T5 gesteuert. Dieser Transistor T5 wird gesondert angesteuert, um die Bestromung der Scheibenheizung S zu regulieren und die Scheibenheizung S ein- und auszuschalten.

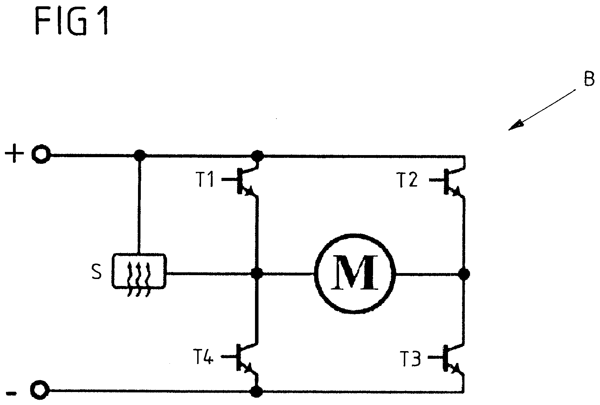

Mit der Figur 1 ist ein Ausführungsbeispiel für eine Brückenschaltung B gezeigt, über die nicht nur die Steuerung der Verstellbewegung der Fensterscheibe erfolgt, sondern über die gleichfalls die Bestromung der Scheibenheizung S steuerbar ist. Hierbei ist der Transistor T 4' der Brückenschaltung B' der Figur 5 durch einen "stärkeren" Transistor T4 in der Brückenschaltung ersetzt. Die Scheibenheizung S ist dabei nun mit der Brückenschaltung B und ihren Transistoren T1 bis T4 derart verschaltet, dass über eine Ansteuerung des Transistors T4 gleichfalls die Bestromung der Scheibenheizung S gesteuert werden kann. Hierfür ist die Scheibenheizung S mit dem Brückenzweig der Brückenschaltung 1 verbunden, in dem der Antriebsmotor M angeordnet ist.

Je nachdem, ob über den Antriebsmotor M die Fensterscheibe angehoben oder abgesenkt werden soll, werden unterschiedliche Paare von Transistoren T1 bis T4 angesteuert. Gleichzeitig ist aber mit der Ansteuerung des Transistors T4 auch die Aktivierung und/oder Bestromung der Scheibenheizung S verbunden. Die Transistoren T1 bis T4 sind hierbei spannungsgesteuert, so dass sich für die unterschiedlichen Funktionen die in der nachstehend eingeblendeten Tabelle zusammengestellten Spannungszustände der einzelnen Komponenten - Transistoren T1 bis T4, Scheibenheizung S und Antriebsmotor M - ergeben:

| | **T1** | **T2** | **T3** | **T4** | **S** | **M** |
|---|---|---|---|---|---|---|
| Heben | 1 | 0 | 1 | 0 | 0 | 1 |
| Senken | 0 | 1 | 0 | 1 | 1 | 1 |
| Heizen | 0 | 0 | 0 | 1 | 1 | 0 |

Aus der Tabelle ist beispielsweise ersichtlich, dass für die Bestromung und Aktivierung der Schreibenheizung S über die vorgesehene Spannungsquelle lediglich der Transistor T4 anzusteuern und dementsprechend zu schalten ist. Für das Anheben der Fensterscheibe und folglich deren Verstellung in die zweite Verstellrichtung werden die Transistoren T1 und T3 angesteuert. Für das Senken der Fensterscheibe werden demgegenüber die beiden anderen Transistoren T2 und T4 angesteuert, so dass der Antriebsmotor M die Fensterscheibe in die entgegengesetzte erste Verstellrichtung (nach unten) verstellt wird. Indem für das Senken der Fensterscheibe die Transistoren T2 und T4 angesteuert werden, werden die Scheibenheizung S und der Antriebsmotor M in Reihe geschaltet. Die Scheibenheizung S wird hier folglich auch beim Absenken der Fensterscheibe stets mittels des geschalteten Transistors T4, über den die Bestromung der Scheibenheizung S auch gesondert, d.h., ohne Bestromung des Antriebsmotors M steuerbar ist, mit Strom versorgt.

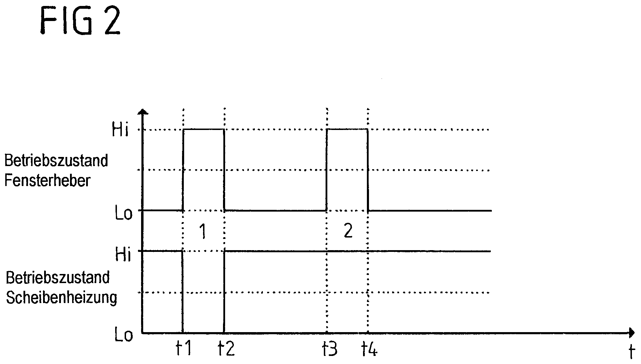

Derart ergeben sich die in der Figur 2 dargestellten Betriebszustände für den Antriebsmotor M oder den Antriebsmotor M aufweisenden Fensterheber und die Scheibenheizung S, wenn die Scheibenheizung S über die Ansteuerung des einen Transistor T4 bereits bestromt ist. Wird in diesem Fall zu einem Zeitpunkt t1 der Fensterheber zum Schließen der Fensterscheibe betätigt, werden hierfür die Transistoren T1 und T3 angesteuert. Hierdurch wechselt der Betriebszustand des Fensterhebers von einem inaktiven Betriebszustand "Lo" zu einem aktiven Betriebszustand "Hi". Gleichzeitig ist - durch die für das Anheben der Fensterscheibe nicht mehr aufrecht zu erhaltende Durchschaltung des Transistor T4 - die Bestromung der Scheibenheizung S über die Brückenschaltung B unterbrochen. Ist zu einem Zeitpunkt t2 das Anheben der Fensterscheibe beendet, ist der Fensterheber wieder inaktiv. Für eben diese Zeitspanne von t2-t1 wird demnach die Bestromung der Scheibenheizung S unterbrochen und die Scheibenheizung S inaktiv geschaltet.

Wird demgegenüber bei eingeschalteter Scheibenheizung S der Fensterheber zum Öffnen der Scheibe zu einem Zeitpunkt t3 betätigt, bleibt die Scheibenheizung S bestromt und eingestaltet. Es tritt somit keine Änderung am Betriebszustand der Scheibenheizung S für die Dauer des Anhebens der Fensterscheibe durch den Antriebsmotor M auf (Zeitspanne t4-t3).

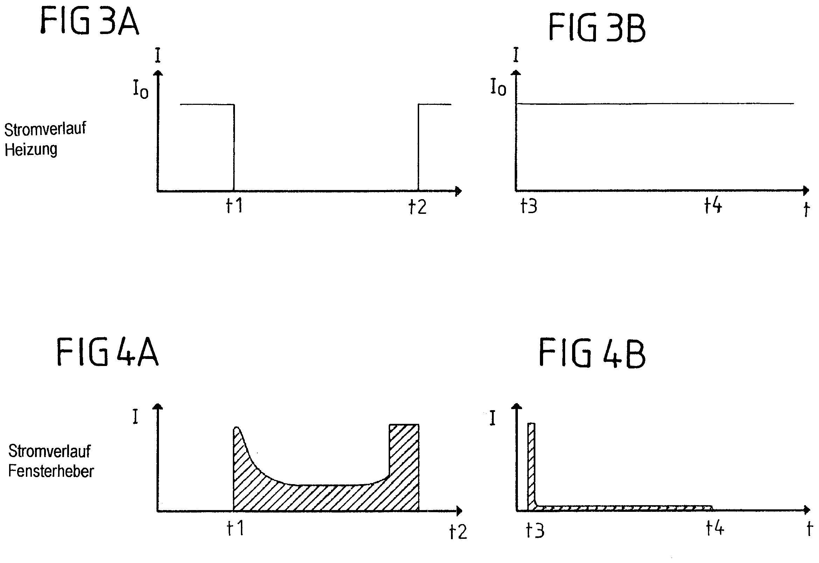

Ein Vorteil bei der dargestellten Ausführungsvariante, bei der die Scheibenheizung S beim Heben der Fensterscheibe inaktiv geschaltet wird, wird anhand der Figuren 3A bis 3B und 4A bis 4B deutlich werden. So ist die Leistungsaufnahme des Antriebsmotors M beim Heben der Fensterscheibe deutlich größer als beim Absenken der Fensterscheibe. Beim Anheben der Fensterscheibe erfolgt eine Verstellbewegung gegen die an der Fensterscheibe angreifende Gewichtskraft. Zudem muss vor dem Erreichen der vollständig geschlossenen Stellung eine größere Verstellkraft aufgebracht werden, um den oberen Rand der Fensterscheibe in eine Dichtung einzufahren. Diese gegenüber einem Absenken der Fensterscheibe höheren Verstellkräfte sind anhand der Figur 4A ersichtlich, in der der zu der aufzubringenden Verstellkraft proportionale Verlauf des Motorstromes I des Antriebsmotors M über die Zeitspanne t2-t1 für einen vollständigen Scheibenhub beim Heben der Fensterscheibe dargestellt ist. Diesem Stromverlauf ist mit der Figur 4B der Stromverlauf am Antriebsmotor M beim Absenken der Fensterscheibe für die Zeitspanne t4-t3 ebenfalls für einen vollständigen Scheibenhub gegenübergestellt. Hieraus ist ersichtlich, dass die Leistungsaufnahme am Antriebsmotor M - über einen vollständigen Scheibenhub - beim Anheben der Fensterscheibe um ein Vielfaches höher ist als beim Absenken der Fensterscheibe.

In den Figuren 3A und 3B ist ferner der Stromverlauf an der Scheibenheizung S für das Heben und das Absenken der Fensterscheibe in den genannten Zeitspannen t2-t1 und t4-t3 dargestellt. Hieran ist nochmals veranschaulicht, wie die Bestromung der Scheibenheizung S unterbrochen wird, sobald der Antriebsmotor M zum Heben der Fensterscheibe über die Brückenschaltung B betätigt wird. Die an der Heizung S messbare Stromstärke fällt von einem Wert I₀ auf 0 ab. Hierdurch ist nun aber erreicht, dass bei einem Betriebszustand des Antriebsmotors M, in dem dieser eine vergleichsweise große Leistung aufbringt, die Brückenschaltung B und insbesondere der Transistor T4 nicht zusätzlich durch die aktivierte Scheibenheizung S belastet wird. Im Übrigen kommt es in der Praxis eher selten vor, dass bei geöffneter Fensterscheibe die Scheibenheizung S aktiviert ist. Deutlich häufig ist die Scheibenheizung S aktiviert, wenn die Fensterscheibe geschlossen ist.

Analog zu einer Ansteuerung einer Scheibenheizung S kann auf Basis der erfindungsgemäßen Lösung die Brückenschaltung B eines Fahrzeugfensterhebers beispielsweise auch für die Ansteuerung eines elektrochromen Glases einer Scheibe genutzt werden. Hierbei ist das elektrochrome Glas in einer Variante derart träge und/oder seine Steuerelektronik so ausgebildet, dass eine Unterbrechung der Bestromung für eine Zeitspanne (t2-t1), in der das Verschlusselement unter normalen Bedingungen von seiner maximal offenen in seine maximal geschlossene Stellung verstellt wird, nahezu keine für einen Nutzer visuell wahrnehmbare Veränderung des Grades der Transparenz des Glases verursacht.

Anstelle der Verstellung einer Fensterscheibe kann über den Antriebsmotor M der Brückenschaltung B auch ein Schiebedach eines Fahrzeugs, eine Heckklappe, eine (klappbare oder verschiebliche) Seitentür bzw. Schiebetür oder ein Cabrioverdeck verstellt werden.

Ferner kann über die Brückenschaltung B anstelle einer Scheibenheizung S für eine Fensterscheibe eine Scheibenheizung für eine (über den Antriebsmotor M nicht zu verstellende) Heckscheibe oder für einen Spiegel des Fahrzeugs gesteuert werden.

### Bezugszeichenliste

- B, B': Brückenschaltung
- I₀: Stromstärke
- M: Antriebsmotor
- S: Scheibenheizung (zusätzlicher Verbraucher)
- t1, t2, t3, t4: Zeitpunkt
- T1, T2, T3, T4, T4': Transistor

## Patentansprüche

1. Verstellvorrichtung für ein Verschlusselement an einem Fahrzeug, wobei das Verschlusselement mittels der Verstellvorrichtung zwischen einer offenen und einer geschlossenen Stellung verstellbar ist und wobei die Verstellvorrichtung zur Verstellung des Verschlusselements einen Antriebsmotor (M) sowie eine elektronische Steuereinheit aufweist und die Steuereinheit eine Brückenschaltung (B) umfasst, um den Antriebsmotor (M) mit elektrischem Strom zu versorgen und die Drehzahl sowie die Drehrichtung eines mit dem Verschlusselement zu koppelnden Antriebselements des Antriebsmotors (M) zu steuern, wobei die Brückenschaltung (B) mit wenigstens einem zusätzlichen elektrischen Verbraucher (S) des Fahrzeugs verbunden und zur Steuerung der Bestromung des wenigstens einen zusätzlichen elektrischen Verbrauchers (S) ausgebildet und vorgesehen ist,
**dadurch gekennzeichnet, dass**
die Brückenschaltung (B) vier Transistoren (T1-T4) umfasst, über die je nach Ansteuerung insbesondere eine Drehung des Antriebselements des Antriebsmotors (M) in die eine oder in die andere Drehrichtung gesteuert werden kann, wobei einer der Transistoren (T1-T4) zur Bestromung des zusätzlichen Verbrauchers (S) ansteuerbar ist und der zur Bestromung des zusätzlichen Verbrauchers (S) ansteuerbare Transistor (T4) für eine größere Leistungsaufnahme ausgelegt ist als die übrigen Transistoren (T1-T3) der Brückenschaltung (B).

2. Verstellvorrichtung nach Anspruch 1, **dadurch gekennzeichnet, dass** der Antriebsmotor (M) in einem Brückenzweig der Brückenschaltung (B) verschaltet ist und der zusätzliche Verbraucher (S) an den Brückenzweig angeschlossen ist.

3. Verstellvorrichtung nach Anspruch 1 oder 2, **dadurch gekennzeichnet, dass** die Brückenschaltung (B) ausgebildet und vorgesehen ist, den zusätzlichen Verbraucher (S) zu bestromen, wenn das Antriebselement des Antriebsmotors (M) zu einer Drehung in eine bestimmte Drehrichtung angetrieben wird.

4. Verstellvorrichtung nach einem der vorhergehenden Ansprüche, **dadurch gekennzeichnet, dass** die Brückenschaltung (B) ausgebildet und vorgesehen ist, eine Bestromung des zusätzlichen Verbrauchers (S) zu unterbrechen, solange das Antriebselement des Antriebsmotors (M) zu einer Drehung in eine bestimmte Drehrichtung angetrieben wird.

5. Verstellvorrichtung nach einem der vorhergehenden Ansprüche, **dadurch gekennzeichnet, dass** das Verschlusselement eine Fensterscheibe, ein Schiebedach oder ein Cabrioverdeck umfasst.

6. Verstellvorrichtung nach einem der vorhergehenden Ansprüche, **dadurch gekennzeichnet, dass** der zusätzliche Verbraucher ein Heizelement, insbesondere eine Spiegel- und/oder Scheibenheizung und/oder ein elektrochromes Glas umfasst.

7. Verstellvorrichtung nach Anspruch 4 und 6, **dadurch gekennzeichnet, dass** bei einem elektrochromen Glas dieses und/oder seine Steuerelektronik so ausgebildet ist, dass eine Unterbrechung der Bestromung für eine Zeitspanne, in der das Verschlusselement unter Normalbedingungen von seiner geschlossenen, insbesondere von einer maximal geschlossenen, in seine offene, insbesondere eine maximal offene, Stellung verstellt wird oder umgekehrt, keine oder nahezu keine für einen Nutzer visuell wahrnehmbare Veränderung des Grades der Transparenz des Glases verursacht.

8. Verstellvorrichtung nach einem der vorhergehenden Ansprüche, **dadurch gekennzeichnet, dass** ein einzelnes Steuergerät für die Steuerung des Antriebsmotors (M) und für die Steuerung der Bestromung des wenigstens einen zusätzlichen Verbrauchers (S) vorgesehen ist.

9. Elektronische Steuereinheit für die fremdkraftbetätigte Verstellung eines Verschlusselements an einem Fahrzeug mittels eines Antriebsmotors (M), wobei die Steuereinheit eine Brückenschaltung (B) umfasst, um den Antriebsmotor (M) mit elektrischem Strom zu versorgen und die Drehzahl sowie die Drehrichtung eines mit dem Verschlusselement zu koppelnden Antriebselements des Antriebsmotors (M) zu steuern, wobei die Brückenschaltung (B) mit wenigstens einem zusätzlichen elektrischen Verbraucher (S) des Fahrzeugs verbindbar und zur Steuerung der Bestromung des wenigstens einen zusätzlichen elektrischen Verbrauchers (S) ausgebildet und vorgesehen ist,
**dadurch gekennzeichnet, dass**
die Brückenschaltung (B) vier Transistoren (T1-T4) umfasst, über die je nach Ansteuerung insbesondere eine Drehung des Antriebselements des Antriebsmotors (M) in die eine oder in die andere Drehrichtung gesteuert werden kann, wobei einer der Transistoren (T1-T4) zur Bestromung des zusätzlichen Verbrauchers (S) ansteuerbar ist und der zur Bestromung des zusätzlichen Verbrauchers (S) ansteuerbare Transistor (T4) für eine größere Leistungsaufnahme ausgelegt ist als die übrigen Transistoren (T1-T3) der Brückenschaltung (B).

## Claims

1. An adjustment device for a closure element on a vehicle, wherein the closure element is adjustable between an open and a closed position by means of the adjustment device and wherein the adjustment device includes a drive motor (M) and an electronic control unit for adjusting the closure element and the control unit comprises a bridge circuit (B), in order to supply the drive motor (M) with electric power and control the rotational speed and the direction of rotation of a drive element of the drive motor (M) to be coupled with the closure element, wherein the bridge circuit (B) is connected with at least one additional electric load (S) of the vehicle and is formed and provided to control the energization of the at least one additional electric load (S),
**characterized in that**
the bridge circuit (B) comprises four transistors (T1-T4) via which in particular a rotation of the drive element of the drive motor (M) in the one or in the other direction of rotation can be controlled depending on the actuation, wherein one of the transistors (T1-T4) is actuatable for energizing the additional load (S) and the transistor (T4) actuatable for energizing the additional load (S) is designed for a larger power consumption than the remaining transistors (T1-T3) of the bridge circuit (B).

2. The adjustment device according to claim 1, **characterized in that** the drive motor (M) is interconnected in a bridge branch of the bridge circuit (B) and the additional load (S) is connected to the bridge branch.

3. The adjustment device according to claim 1 or 2, **characterized in that** the bridge circuit (B) is formed and provided to energize the additional load (S) when the drive element of the drive motor (M) is driven to rotate in a particular direction of rotation.

4. The adjustment device according to any of the preceding claims, **characterized in that** the bridge circuit (B) is formed and provided to interrupt an energization of the additional load (S) as long as the drive element of the drive motor (M) is driven to rotate in a particular direction of rotation.

5. The adjustment device according to any of the preceding claims, **characterized in that** the closure element comprises a window pane, a sunroof or a convertible top.

6. The adjustment device according to any of the preceding claims, **characterized in that** the additional load comprises a heating element, in particular a mirror and/or window heater and/or an electrochromic glass.

7. The adjustment device according to claims 4 and 6, **characterized in that** in the case of an electrochromic glass the same and/or its electronic control unit is formed such that an interruption of the energization for a time period in which under normal conditions the closure element is adjusted from its closed, in particular a maximally closed position into its open, in particular a maximally open position or vice versa causes no or almost no change of the degree of transparency of the glass visually perceptible for a user.

8. The adjustment device according to any of the preceding claims, **characterized in that** an individual controller is provided for controlling the drive motor (M) and for controlling the energization of the at least one additional load (S).

9. An electronic control unit for the power-operated adjustment of a closure element on a vehicle by means of a drive motor (M), wherein the control unit comprises a bridge circuit (B), in order to supply the drive motor (M) with electric power and control the rotational speed as well as the direction of rotation of a drive element of the drive motor (M) to be coupled with the closure element, the bridge circuit (B) is connectable with at least one additional electric load (S) of the vehicle and is formed and provided to control the energization of the at least one additional electric load (S),
**characterized in that**
the bridge circuit (B) comprises four transistors (T1-T4) via which in particular a rotation of the drive element of the drive motor (M) in the one or in the other direction of rotation can be controlled depending on the actuation, wherein one of the transistors (T1-T4) is actuatable for energizing the additional load (S) and the transistor (T4) actuatable for energizing the additional load (S) is designed for a larger power consumption than the remaining transistors (T1-T3) of the bridge circuit (B).

## Revendications

1. Dispositif d'ajustement pour un élément de fermeture au niveau d'un véhicule, dans lequel l'élément de fermeture peut être ajusté au moyen du dispositif d'ajustement entre une position ouverte et une position fermée et dans lequel le dispositif d'ajustement servant à ajuster l'élément de fermeture présente un moteur d'entraînement (M) ainsi qu'une unité de commande électronique et l'unité de commande comprend un circuit en pont (B) pour alimenter le moteur d'entraînement (M) en courant électrique et pour commander la vitesse de rotation ainsi que la direction de rotation d'un élément d'entraînement, à coupler à l'élément de fermeture, du moteur d'entraînement (M),
dans lequel
le circuit en pont (B) est relié à au moins un consommateur (S) électrique supplémentaire du véhicule et est réalisé et prévu pour commander l'alimentation en courant de l'au moins un consommateur (S) électrique supplémentaire,
**caractérisé en ce que**
le circuit en pont (B) comprend quatre transistors (T1 - T4),
par l'intermédiaire desquels, selon le pilotage, en particulier une rotation de l'élément d'entraînement du moteur d'entraînement (M) peut être commandée dans une ou dans l'autre direction de rotation, dans lequel un des transistors (T1 - T4) peut être piloté pour l'alimentation en courant du consommateur (S) supplémentaire et le transistor (T4) pouvant être piloté pour l'alimentation en courant du consommateur (S) supplémentaire est configuré pour une consommation de puissance plus importante que celle des transistors (T1 - T3) restants du circuit en pont (B).

2. Dispositif d'ajustement selon la revendication 1, **caractérisé en ce que** le moteur d'entraînement (M) est branché dans une branche de pont du circuit en pont (B), et que le consommateur (S) supplémentaire est raccordé à la branche de pont.

3. Dispositif d'ajustement selon la revendication 1 ou 2, **caractérisé en ce que** le circuit en pont (B) est réalisé et prévu pour alimenter en courant le consommateur (S) supplémentaire quand l'élément d'entraînement du moteur d'entraînement (M) est entraîné aux fins d'une rotation dans une direction de rotation définie.

4. Dispositif d'ajustement selon l'une quelconque des revendications précédentes, **caractérisé en ce que** le circuit en pont (B) est réalisé et prévu pour interrompre une alimentation en courant du consommateur (S) supplémentaire tant que l'élément d'entraînement du moteur d'entraînement (M) est entraîné aux fins d'une rotation dans une direction de rotation définie.

5. Dispositif d'ajustement selon l'une quelconque des revendications précédentes, **caractérisé en ce que** l'élément de fermeture comprend une vitre de fenêtre, un toit coulissant et une capote de cabriolet.

6. Dispositif d'ajustement selon l'une quelconque des revendications précédentes, **caractérisé en ce que** le consommateur supplémentaire comprend un élément chauffant, en particulier un chauffage de rétroviseurs et/ou de vitres et/ou un verre électrochromique.

7. Dispositif d'ajustement selon la revendication 4 et 6, **caractérisé en ce que** dans le cas d'un verre électrochromique, ce dernier et/ou son électronique de commande sont réalisés de telle sorte qu'une interruption de l'alimentation en courant n'entraîne aucune voire quasiment aucune modification visuellement perceptible par un utilisateur de degré de la transparence du verre pendant un intervalle de temps, dans lequel l'élément de fermeture est ajusté dans des conditions normales depuis sa position fermée, en particulier depuis une position fermée au maximum, dans sa position ouverte, en particulier dans une position ouverte au maximum, ou inversement.

8. Dispositif d'ajustement selon l'une quelconque des revendications précédentes, **caractérisé en ce qu'**un unique appareil de commande est prévu pour la commande du moteur d'entraînement (M) et pour la commande de l'alimentation en courant de l'au moins un consommateur (S) supplémentaire.

9. Unité de commande électronique pour l'ajustement actionné par une force extérieure d'un élément de fermeture au niveau d'un véhicule au moyen d'un moteur d'entraînement (M), dans laquelle l'unité de commande comprend un circuit en pont (B) pour alimenter le moteur d'entraînement (M) en un courant électrique et pour commander la vitesse de rotation ainsi que la direction de rotation d'un élément d'entraînement, à coupler à l'élément de fermeture, du moteur d'entraînement (M),
dans laquelle
le circuit en pont (B) peut être relié à au moins un consommateur (S) électrique supplémentaire du véhicule et est réalisé et prévu pour commander l'alimentation en courant de l'au moins un consommateur (S) électrique supplémentaire,
**caractérisée en ce que**
le circuit en pont (B) comprend quatre transistors (T1 - T4),
par l'intermédiaire desquels, selon le pilotage, en particulier une rotation de l'élément d'entraînement du moteur d'entraînement (M) peut être commandée dans une ou dans l'autre direction de rotation, dans laquelle un des transistors (T1 - T4) peut être piloté pour l'alimentation en courant du consommateur (S) supplémentaire et le transistor (T4) pouvant être piloté pour l'alimentation en courant du consommateur (S) supplémentaire est configuré pour une consommation de puissance plus importante que celle des transistors (T1 - T3) restants du circuit en pont (B).
